(19) Europäisches Patentamt / European Patent Office / Office européen des brevets

(11) **EP 4 593 113 A1**

(12) **EUROPEAN PATENT APPLICATION**
published in accordance with Art. 153(4) EPC

(43) Date of publication:
**30.07.2025 Bulletin 2025/31**

(21) Application number: **22966889.2**

(22) Date of filing: **01.12.2022**

(51) International Patent Classification (IPC):
*H01M 4/505* (2010.01)      *H01M 4/525* (2010.01)

(52) Cooperative Patent Classification (CPC):
**H01M 4/505; H01M 4/525;** Y02E 60/10

(86) International application number:
**PCT/CN2022/135799**

(87) International publication number:
**WO 2024/113299 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central, Hong Kong (HK)**

(72) Inventors:
• **WU, Kai
Ningde City, Fujian 352100 (CN)**

• **ZHANG, Qiyu
Ningde City, Fujian 352100 (CN)**
• **WU, Qi
Ningde City, Fujian 352100 (CN)**
• **CHEN, Qiang
Ningde City, Fujian 352100 (CN)**
• **LIU, Na
Ningde City, Fujian 352100 (CN)**

(74) Representative: **Kraus & Lederer PartGmbB
Thomas-Wimmer-Ring 15
80539 München (DE)**

(54) **POSITIVE ELECTRODE MATERIAL AND PREPARATION METHOD THEREFOR, AND SECONDARY BATTERY AND ELECTRIC DEVICE COMPRISING SAME**

(57) The present application provides a positive electrode material comprising a substrate particle of formula (I):

$$Li_{1+a}[Ni_xCo_yMn_zM_bW_c]O_2 \qquad (I)$$

wherein the M is selected from one or more of Mo, Zr, Al, Ti, Sb, Nb, Te, Mg, Al, Ca, Zn and Sr, $0.6 < x < 1, 0 < y < 0.4, 0 < z < 0.4, 0 < a < 0.2, 0 < b < 0.1, 0 < c < 0.1$, and $x + y + z + b + c = 1$; and the W is enriched at the grain boundary of the substrate particle. The positive electrode material of the present application has a relatively high specific capacity, a relatively good cycling performance, a relatively high compacted density, and a reduced content of lithium impurities and gas production. The present application further provides a method for preparing a positive electrode material, a positive electrode plate comprising the positive electrode material, a secondary battery, and a power consuming device.

5

*FIG. 1*

## Description

## Technical Field

The present application relates to the technical field of lithium batteries, in particular to a positive electrode material and a preparation method therefor, a secondary battery comprising the positive electrode material, and a power consuming device.

## Background Art

Lithium ion batteries are increasingly favored in the battery industry due to their advantages of being lightweight, clean and environmentally friendly and having a long lifespan. The positive electrode material of a lithium ion battery, as a key material thereof, has always been a focus of research and development in the industry. Currently, the mainstream positive electrode materials for a lithium ion battery meet the requirements of higher and higher energy density and are more favored due to their characteristics of a high capacity and a high energy density. However, such a positive electrode material has a poor capacity, and has the following problems: the cracking and powdering of the particles thereof may occur during cycling, which lead to a poor cycling performance, the content of lithium impurities is high, the material is prone to gas production, the safety performance is poor, etc.

Therefore, there is a need in the art for a positive electrode material which can improve at least one of the above problems and has a good performance.

## Summary of the Invention

In view of the above problems, the present application has been made with an object to provide a positive electrode material comprising a substrate particle having a chemical composition of formula (I):

$$Li_{1+a}[Ni_xCo_yMn_zM_bW_c]O_2 \qquad (I)$$

wherein the M is selected from one or more of Mo, Zr, Al, Ti, Sb, Nb, Te, Mg, Al, Ca, Zn and Sr, $0.6 < x < 1$, $0 < y < 0.4$, $0 < z < 0.4$, $0 < a < 0.2$, $0 < b < 0.1$, $0 < c < 0.1$, and $x + y + z + b + c = 1$; and the W is enriched at the grain boundary of the substrate particle. The positive electrode material of the present application has a good comprehensive performance: a high specific discharge capacity, a good cycling performance, a relatively low content of lithium impurities, and a less gas production.

In any embodiment, the formula (I) satisfies one or more of the following conditions (1) to (8):

(1) the M is selected from one or more of Zr, Al, Mg and Ti;

(2)

$$0.8 \leq x < 1;$$

(3) $0 < a < 0.08$;
(4) $0 < b < 0.018$;
(5) $0 < c < 0.0013$;
(6) b : c = 0.076-384, optionally b : c = 5-69, more optionally b : c = 13-69;
(7) $(1 + a) : (x + y + z) = 1.01-1.25$, optionally $(1 + a) : (x + y + z) = 1.05-1.15$; and
(8) the doping weight of the element M is $\geq$ the doping weight of the element W, and optionally the weight ratio of the element M to the element tungsten (W) is 1 : (0.1-1), more optionally 1 : (0.1-0.5). The positive electrode material satisfying one or more of the above conditions has a better performance.

In any embodiment, in the substrate particle, the content of the W within a thickness of 40 nm from the grain boundary is at least 80 wt%, optionally at least 90 wt%, based on the total weight of the W in the substrate particle. The element W doped in the material was almost entirely enriched at the grain boundary, which is conducive to increasing the compacted density and improving the other properties.

In any embodiment, the content of the W in the substrate particle is 100-200000 ppm, optionally 100-3000 ppm, more optionally 500-2500 ppm, based on the total weight of the substrate particle. This is conducive to improving the particle integrity, the cycling performance, etc.

In any embodiment, the positive electrode material has a span of volume particle size distribution, i.e., $(D_v90-D_v10)/D_v50$, of 1.1-1.8, optionally 1.2-1.5, more optionally 1.25-1.45. This is conducive to achieving a higher compacted density, increasing the capacity, etc.

In any embodiment, the positive electrode material further comprises a coating layer provided on the surface of the substrate particle, wherein the coating layer comprises at least one element from W, Co, Al and B; optionally, the coating layer comprises at least the element W and/or the element B; and more optionally, the coating layer comprises the elements W, Co, Al and B. In this way, the cycling performance of the material is further improved, and it is beneficial for reducing the content of lithium impurities and improving the safety performance.

In any embodiment, the coating layer satisfies one or more of the following conditions (1) to (5):

(1) the coating layer comprises 100-2000 ppm, optionally 500-1000 ppm, of the element W, based on the total weight of the substrate particle;
(2) the coating layer comprises 100-16000 ppm, optionally 1000-13000 ppm, of the element Co, based on the total weight of the substrate particle;
(3) the coating layer comprises 100-3000 ppm, optionally 500-2000 ppm, of the element Al, based on the total weight of the substrate particle;
(4) the coating layer comprises 100-2000 ppm, optionally 500-1500 ppm, of the element B, based on the total weight of the substrate particle; and
(5) the coating layer comprises the elements W, Co, Al and B, and the total amount of the four

elements is 1000-22000 ppm, preferably 1000-15000 ppm, based on the total weight of the substrate particle. Coating various elements in such a range is more conducive to improving the performance of the material.

A second aspect of the present application provides a method for preparing a positive electrode material comprising a substrate particle having a chemical composition of formula (I):

$$Li_{1+a}[Ni_xCo_yMn_zM_bW_c]O_2 \qquad (I)$$

wherein the M is selected from one or more of Mo, Zr, Al, Ti, Sb, Nb, Te, Mg, Al, Ca, Zn and Sr, $0.6 \leq x < 1$, $0 < y < 0.4$, $0 < z < 0.4$, $0 < a < 0.2$, $0 < b < 0.1$, $0 < c < 0.1$, and $x + y + z + b + c = 1$; and the W is enriched at the grain boundary of the substrate particle;

the method comprising the following steps:

- S0: providing a precursor material having a chemical composition of $Ni_xCo_yMn_z(OH)_2$, wherein $0.6 \leq x < 1$, $0 < y < 0.4$, $0 < z < 0.4$, and $x + y + z = 1$, and
- S1: grinding and mixing the precursor material with a W source compound, then adding an Li source compound and an M source compound thereto and fully mixing same, and sintering the mixture to obtain the substrate particle. The positive electrode material prepared by the method of the present application has a good comprehensive performance: a high capacity, a good cycling performance, a low content of lithium impurities, and safety performance.

In any embodiment, the particle of the W source compound has a particle size of 20-500 nm, optionally 50-300 nm; and/or wherein the W source compound is selected from one or more of $WO_3$, $H_2WO_4$, $Li_2WO_4$, $(NH_4)_2WO_4$, $MgWO_4$ and $Zr(WO_3)_2$; optionally from one or more of $WO_3$, $H_2WO_4$ and $Li_2WO_4$; and/or wherein the addition amount of the element W is 100-200000 ppm, optionally 100-3000 ppm, more optionally 500-2500 ppm, based on the total weight of the precursor material. Using the W source compounds above and the particle size thereof are more conducive to the doping of the element W into the grain boundary of the material during sintering at a high temperature.

In any embodiment, the M source compound is selected from sulfates, nitrates, chlorides, carbonates, oxides, hydroxides, oxalates, and acetates that contain the element M, optionally the M source compound is an oxide of the element M; optionally, the element M is one or more of Zr, Al, Mg and Ti; and optionally, the addition amount of the element M is 100-5000 ppm, optionally 500-3000 ppm, based on the total weight of the precursor material. These compounds containing the element M are more conducive to the uniform doping of the element M into the lattice of a layered material at a high temperature, and the use of such an addition amount is more beneficial for improving the performance of the material.

In any embodiment, step S1 satisfies at least one of the following conditions:

(1) the ratio of the added weight of the element M to the element W is 1 : (0.1-1), optionally 1 : (0.1-0.5); and
(2) the ratio of the molar weight of the Li atom to the total molar weight of the Ni, Co, and Mn atoms is 1.01-1.25, optionally 1.05-1.15.

This enables the obtained positive electrode material to have a relatively high specific discharge capacity and a better cycling performance.

In any embodiment, the grinding and mixing are carried out by means of mechanical milling or ball milling; optionally, the grinding and mixing are carried out in a ball mill, optionally a heated ball mill; optionally, the grinding is carried out at a rotational speed of 500-3000 r/min, optionally 1000-2000 r/min, or 800-1500 r/min; and optionally, the grinding and mixing are carried out at a temperature of 30-100°C, optionally 40-60°C. Using the above process conditions can accelerate the W source compound to be uniformly mixed with the precursor material and stably attached thereto, which is beneficial for the element W to be enriched at the grain boundary. In any embodiment, the method further comprises a step of providing a coating layer on the surface of the substrate particle, including:

- S2: mixing the substrate particle obtained in step S1 with a W-containing compound and/or a Co-containing compound, and then sintering same; and/or
- S3: mixing the substrate particle obtained in step S1 or the sinter obtained in step S2 with an Al-containing compound and/or a B-containing compound, and then sintering same.

The substrate particle is coated by means of the above coating steps, which further improves the performance of the material.

In any embodiment, step S2 satisfies one or more of the following conditions:

(1) the W-containing compound is selected from one or more of $WO_3$, $H_2WO_4$, $Li_2WO_4$, $(NH_4)_2WO_4$, $MgWO_4$ and $Zr(WO_3)_2$; and
(2) the addition amount of the element W is 100-2000 ppm, optionally 500-1000 ppm, based on the total weight of the precursor material. This is beneficial for the W-containing coating layer to be more uniform, which is conducive to improving the performance of the material.

In any embodiment, step S2 satisfies one or more of the following conditions:

(1) the Co-containing compound is selected from one or more of $Co_3O_4$, $Co(OH)_2$, $CoO$, $CoOOH$, $Co(CH_3COO)_2$, $CoC_2O_4$, and $CoCO_3$; and
(2) the addition amount of Co is 100-16000 ppm, preferably 1000-13000 ppm, based on the total weight of the precursor material. This is more conducive to reducing the lithium impurities on the surface and improving the cycling performance.

In any embodiment, in step S3, the Al-containing compound is selected from one or more of $Al_2O_3$, $Al(OH)_3$, $Al_2(SO_4)_3$, $AlCl_3$ and $Al(NO_3)_3$; and/or the addition amount of Al is 100-3000 ppm, preferably 500-2000 ppm, based on the total weight of the precursor material. In this way, the interface stability of the material particle can be further improved and the interfacial side reactions are reduced, which are more conducive to improving the cycling, storage and safety performance of the material.

In any embodiment, in step S3, the B-containing compound is selected from one or more of $BCl_3$, $B_2(SO_4)_3$, $B(NO_3)_3$, $BN$, $B_2O_3$, $BF_3$, $BBr_3$, $BI_3$, $H_2BO_5P$, $H_3BO_3$, $C_5H_6B(OH)_2$, $C_3H_9B_3O_6$, $(C_2H_5O)_3B$ and $(C_3H_7O)_3B$, and/or the addition amount of B is 100-2000 ppm, preferably 500-1500 ppm, based on the total weight of the precursor material. In this way, the content of lithium impurities on the surface of the material can be further reduced, the capacity of the material is also increased, and in addition, the interfacial side reactions of the material can be further improved, and the cycling, storage and safety performance of the material can be improved.

In any embodiment, the precursor material has a span of volume particle size distribution of 1.1-1.8, optionally 1.2-1.5; and/or the precursor material has a $D_v50$ of 5-15 $\mu$m, optionally 5-10 $\mu$m. This is beneficial for obtaining a desired positive electrode material having a relatively large compacted density, which is conducive to achieving a relatively high capacity.

A third aspect of the present application provides a secondary battery, comprising the positive electrode material of the first aspect or the positive electrode material obtained by the method of the second aspect.

A fourth aspect of the present application provides a power consuming device comprising the secondary battery according to claim 19.

The positive electrode material of the present application has a good comprehensive performance: a relatively high capacity, a relatively good cycling performance, a relatively low content of lithium impurities, and a relatively low gas production amount.

**Brief Description of the Drawings**

Fig. 1 shows a schematic diagram of a secondary battery according to an embodiment of the present application.

Fig. 2 shows an exploded view of the secondary battery according to an embodiment of the present application as shown in Fig. 1.

Fig. 3 shows a schematic diagram of a battery module according to an embodiment of the present application.

Fig. 4 shows a schematic diagram of a battery pack according to an embodiment of the present application.

Fig. 5 shows an exploded view of the battery pack according to an embodiment of the present application as shown in Fig. 4.

Fig. 6 shows a schematic diagram of a power consuming device according to an embodiment of the present application in which a secondary battery is used as a power source.

Description of reference signs:

1 - battery pack; 2 - upper box body; 3 - lower box body; 4 - battery module; 5 - secondary battery; 51 - housing; 52 - electrode assembly; 53 - top cover assembly

**Detailed Description of Embodiments**

Hereinafter, embodiments of the positive electrode material and the preparation method therefor, the positive electrode plate comprising the positive electrode material, the secondary battery, and the electrical device of the present application are specifically disclosed in detail with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer $\geq 2$, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Lithium ion batteries (lithium secondary batteries) are increasingly favored in the battery industry due to their advantages of being lightweight, clean and environmentally friendly and having a long lifespan. The positive electrode material of a lithium ion battery, as a key material thereof, has always been a focus of research and development in the industry. Currently, the mainstream positive electrode materials for a lithium ion battery include lithium cobaltate, lithium iron phosphate, lithium manganate, and a nickel-cobalt-manganese ternary material. Moreover, emerging materials, such as NCA (nickel-cobalt-aluminum) series and LOL (lithium-rich manganese solid solution), have appeared and have been widely commercialized. Among those, the ternary material, especially the NCA material, meets the requirements of higher and higher energy density and is more favored due to the characteristics thereof of a high capacity and a high energy density.

However, the material particles of the ternary positive electrode materials in the prior art are prone to crack and powder during the lithium intercalation and de-intercalation, leading to a poor cycling performance; and moreover, the existing materials still have problems of more lithium impurities, gas production and expansion, leading to a relatively poor storage and safety performance.

In view of the above drawbacks of such materials in the prior art, the present application provides a positive electrode material and a preparation method therefor. The positive electrode material of the present application has not only a relatively high capacity, but also an improved structural stability and particle integrity of the material, which improve the long cycling performance thereof; and moreover, the positive electrode material of the present application also has a reduced content of lithium impurities and gas production, thereby improving the storage and safety performance thereof.

## Positive electrode material

In an embodiment of the present application, the present application provides a positive electrode material comprising a substrate particle having a chemical composition of formula (I):

$$Li_{1+a}[Ni_xCo_yMn_zM_bW_c]O_2 \qquad (I)$$

wherein the M is selected from one or more of Mo, Zr, Al, Ti, Sb, Nb, Te, Mg, Al, Ca, Zn and Sr, $0.6 \le x < 1, 0 < y < 0.4, 0 < z < 0.4, 0 < a < 0.2, 0 < b < 0.1, 0 < c < 0.1$, and $x + y + z + b + c = 1$; and the W is enriched at the grain boundary of the substrate particle.

The positive electrode material of the present application has a good comprehensive performance: a high specific discharge capacity, a good cycling performance, a relatively low content of lithium impurities, and a less gas production.

The positive electrode material of the present application is doped with both an element M and the element tungsten (W) and the W is enriched at the grain boundary of the substrate particle, which enables the material to have a good lattice structural stability and particle integrity, and therefore have ideal comprehensive performance: a good specific discharge capacity, an improved cycling performance, a reduced content of lithium impurities, a relatively high compacted density, and an improved safety performance.

For the element M doped, elements having a relative atomic mass < 150 or a stable valence state > + 3 are selected as the element M. Such an element M has a low atomic mass and a small radius, and has appropriate electrostatic repulsion with W and a relatively rapid migration speed to the interior of the material during the sintering process, such that the migration of W towards the interior of the material is inhibited and W is more prone to be enriched at the grain boundary.

Herein, "grain boundary" refer to the boundary between single primary particles in a secondary particle.

Herein, fine particle units without agglomeration (e.g., monocrystal particles) are referred to as "primary particles", and the particles formed after the aggregation of the primary particles are referred to as "secondary particles." Herein, the substrate particle is a secondary particle. Under a scanning electron microscope, it can be observed that particles in a spherical shape are secondary particles, and the nanosheets constituting the secondary particles are primary particles.

Herein, the element W is enriched at the grain boundary, that is, the element W is doped at the surface of each primary particle in the substrate particle.

In some embodiments, the element M is uniformly doped in the crystal structure of the substrate particle. Herein, "uniform doping" means a completely uniform distribution inside the material particle (or in a crystal structure). In some embodiments, in formula (I), M is selected from one or more of Zr, Al, Mg and Ti. These elements are doped as the element M, which is more helpful to stabilize the crystal structure of the material and facilitate the enrichment of W at the grain boundary, thereby improving the performance of the material.

In some embodiments, formula (I) satisfies $0.8 \le x < 1$ and/or $0 < a < 0.08$. In the present application, the coefficients x and a may be conventional, but further controlling the values thereof is helpful to improve the performance of the material.

In some embodiments, formula (I) satisfies $0 < b < 0.018$ and/or $0 < c < 0.0013$. This is helpful to improve the cycling performance of the material, reduce the content of lithium impurities and gas production, and improve the safety performance.

In some embodiments, in formula (I), $0 < y < 0.1$; and/or $0 < z < 0.1$. In the present application, the values of the coefficients y and z are conventional and not critical, but are in the above ranges.

In some embodiments, in formula (I), b : c = 0.076-384, optionally b : c = 5-69, more optionally b : c = 13-69. Such a positive electrode material has a better performance.

In some embodiments, formula (I) satisfies $(1+a):(x+y+z) = 1.01\text{-}1.25$, optionally $(1+a):(x+y+z) = 1.05\text{-}1.15$, and such a positive electrode material has a better performance.

In some embodiments, the doping weight of the element M is ≥ the doping weight of the element W, and optionally the weight ratio of the element M to the element W is $1:(0.1\text{-}1)$, more optionally $1:(0.1\text{-}0.5)$. The contents of the element M and the element W satisfy the relationship above, which is more beneficial for the element W to be enriched at the grain boundary, improves the structural stability and particle integrity of the material, and improves the migration ability of active ions (e.g., Li$^+$) in the material, such that the cycling stability is improved, the compacted density is increased, the content of lithium impurities is reduced, and the safety performance is improved.

In some embodiments, in the substrate particle, the content of W within a thickness of 40 nm from the grain boundary is at least 80%, optionally at least 90%. In the positive electrode material of the present application, the element W doped is almost entirely enriched at the grain boundary, which is conducive to improving the structural integrity and stability of the material particles, increasing the compacted density and improving the performance. In some embodiments, the content of W is 100-200000 ppm, optionally 100-3000 ppm, more optionally 500-2500 ppm, based on the total weight of the substrate particle. This is conducive to improving the particle integrity, the cycling performance, etc., and ensuring that the material also has a good electrochemical performance.

Herein, the doping amount of the element W refers to the content of the element W in the substrate particle.

In some embodiments, the content of M is 100-5000 ppm, optionally 500-3000 ppm, based on the total weight of the substrate particle. Comprising the element M in such a range is more beneficial for W to be enriched at the grain boundary and is helpful to the material to have the ideal performance.

In some embodiments, the positive electrode material has a span of volume particle size distribution, i.e., $(D_v90\text{-}D_v10)/D_v50$, of 1.1-1.8, optionally 1.2-1.5, more optionally 1.25-1.45. The positive electrode material of the present application has a span of volume particle size distribution in the ranges above, which is more beneficial for achieving a relatively high compacted density (for example, the compacted density at a pressure of 5 ton is ≥ 3.45 g/cc, even ≥ 3.50 g/cc), such that it is conducive to improving the energy density and the specific capacity.

Herein, the "span of volume particle size distribution" is defined as the value of $(D_v90\text{-}D_v10)/D_v50$, wherein $D_v90$, $D_v10$ and $D_v50$ represent the average particle size corresponding to 90%, 10%, and 50% of the particles in the volume distribution, respectively. The span of volume particle size distribution reflects the width of the particle size distribution of the material particles - a larger span indicates a wider particle size distribution width. $D_v90$, $D_v10$ and $D_v50$ can be measured using conventional methods and instruments (e.g., a laser particle size analyzer) in the art.

The parameter of "compacted density" is used herein to quantitatively evaluate the hardness of the positive electrode material particles themselves and the compacted density of a positive electrode plate. The compacted density can be measured using any suitable method known to those skilled in the art. Herein, a certain mass, i.e. m, of the positive electrode material is placed into a cylindrical mold with an inner circle radius of R and different pressures are applied by means of a press to test the particle size distribution at different pressures. The test is not stopped until a bimodal particle size distribution occurs under a certain pressure (this indicates the presence of a large number of compressed particles in the tested material) and the density at the pressure is the compacted density. The larger the value of the compacted density, the higher the volumetric energy density of the material particles. The compacted density is calculated according to the following formula:

$$\text{Compacted density} = m/(\pi \cdot R^2 \cdot \Delta H)$$

wherein m is the mass of the tested material added to the mold, R is the inner radius of the mold, and $\Delta H$ is the height difference before and after applying a pressure.

In some embodiments, the positive electrode material of the present application further comprises a coating layer provided on the surface of the substrate particle, wherein the coating layer comprises at least one element from W, Co, Al and B. The positive electrode material comprises a coating layer comprising at least one of the above elements, which can effectively reduce the content of lithium impurities on the surface and/or inhibit the interfacial side reactions, and further improve at least one of the capacity, the cycling performance, and the safety performance of the positive electrode material.

Herein, "lithium impurities" have the meaning commonly understood by those skilled in the art and refer to the lithium source compounds, which are not fully reacted during the high-temperature sintering of the materials, or the by-products thereof. The lithium impurities accumulate on the surface of the material, which not only increases the migration resistance of active ions, leading to a reduced capacity, but also can produce a gas (e.g., $CO_2$), increasing safety risks. Generally, the lithium impurities include (but are not limited to) lithium carbonate and/or lithium hydroxide, etc. The content of lithium impurities can be determined by any method known to those skilled in the art, for example, acid-base titration, etc.

In some embodiments, the coating layer comprises the element W and/or the element B, which is more beneficial for improving the capacity and the cycling performance of the material. In some embodiments, the coating layer comprises the elements W, Co, Al and B, which further improves the capacity and the cycling performance of the material and is beneficial for the reduction of the content of lithium impurities, and the safety performance. The W and/or Co coating layer(s) can optimize the enrichment of W at the grain boundary, reduce the lithium impurities on the surface of the material, and improve the interface stability and the cycling performance; and the

B and/or Al coating layer(s) is(are) beneficial to the improvement of the specific capacity of the material, the alleviation of the interfacial side reactions, and the cycling performance of the material.

In some embodiments, the coating layer comprises 100-2000 ppm, optionally 500-1000 ppm, of the element W, based on the total weight of the substrate particle. In some embodiments, the coating layer comprises 100-16000 ppm, optionally 1000-13000 ppm, of the element Co, based on the total weight of the substrate particle. In some embodiments, the coating layer comprises 100-3000 ppm, optionally 500-2000 ppm, of the element Al, based on the total weight of the substrate particle. In some embodiments, the coating layer comprises 100-2000 ppm, optionally 500-1500 ppm, of the element B, based on the total weight of the substrate particle. Coating various elements in such a range is more conducive to improving the performance of the material.

In some embodiments, the coating layer comprises the elements W, Co, Al and B, and the total amount of the four elements is 1000-22000 ppm, preferably 1000-15000 ppm, based on the total weight of the substrate particle.

The presence of the coating layer and the thickness thereof can be determined by means of conventional methods and instruments. For example, the coating layer can be observed by using a scanning electron microscope, a transmission electron microscope, etc., and it can be seen in the field of view of the microscope that the coating layer is an independent layer outside the substrate particle. The contents of various elements in the coating layer can also be determined by conventional methods and instruments, and can be quantitatively obtained, for example, by means of an EDS element distribution test using a scanning electron microscope.

In some embodiments, the coating layer has a thickness within a conventional range in the art; and optionally, the coating layer has a thickness of 0.001-1 $\mu$m, optionally 0.01-0.5 $\mu$m. The coating layer having a thickness within the ranges above is more beneficial for the positive electrode material to have a better electrochemical performance and volumetric energy density.

## **Preparation method**

Another aspect of the present invention provides a method for preparing a positive electrode material of formula (I):

$$Li_{1+a}[Ni_xCo_yMn_zM_bW_c]O_2 \qquad (I)$$

wherein the M is selected from one or more of Mo, Zr, Al, Ti, Sb, Nb, Te, Mg, Al, Ca, Zn and Sr, $0.6 \leq x < 1, 0 < y < 0.4, 0 < z < 0.4, 0 < a < 0.2, 0 < b < 0.1, 0 < c < 0.1$, and $x + y + z + b + c = 1$; and the W is enriched at the grain boundary of the substrate particle;

the method comprising the following steps:

- S0: providing a precursor material having a chemical composition of $Ni_xCo_yMn_z(OH)_2$, wherein $0.6 \leq x < 1, 0 < y < 0.4, 0 < z < 0.4$, and $x + y + z = 1$, and
- S1: grinding and mixing the precursor material with a W source compound, then adding an Li source compound and an M source compound thereto and fully mixing same, and sintering the mixture to obtain the substrate particle. The positive electrode material prepared by the method of the present application has a good comprehensive performance: a high capacity, a good cycling performance, a low content of lithium impurities, and safety performance.

In some embodiments, the particle of the W source compound has a particle size of 20-500 nm, optionally 50-300 nm. In the method of the present application, using a W source compound having a particle size in the above ranges makes it more easy for W to be doped into the grain boundary of the material during sintering.

In some embodiments, the W source compound is selected from one or more of $WO_3$, $H_2WO_4$, $Li_2WO_4$, $(NH_4)_2WO_4$, $MgWO_4$ and $Zr(WO_3)_2$; optionally from one or more of $WO_3$, $H_2WO_4$ and $Li_2WO_4$. It is easier for these W source compounds to facilitate the doping of the element W at the grain boundary of the material during sintering at a high temperature.

In some embodiments, the addition amount of the element W is 100-3000 ppm, optionally 500-2500 ppm, based on the total weight of the substrate particle. The addition amount of W within the above ranges is conducive to improving the structural stability of the material, improving the cycling performance, and achieving a relatively high specific capacity.

In some embodiments, the M source compound is selected from sulfates, nitrates, chlorides, carbonates, oxides, hydroxides, oxalates, and acetates of the element M, optionally the M source compound is an oxide of the element M. In some embodiments, the element M is one or more of Zr, Al, Mg and Ti. These compounds containing the element M are more beneficial for the element M to be uniformly doped into the lattice of a layered material at a high temperature and achieving the structural stability of the material.

In some embodiments, based on the total weight of the substrate particle, the addition amount of the element M is 100-5000 ppm, optionally 500-3000 ppm, based on the total weight of the substrate particle. In this way, the cycling stability and the specific capacity of the positive electrode material can be improved.

In some embodiments, step S1 satisfies that the ratio of the addition amount of the element M to the element W is 1 : (0.1-1), optionally 1 : (0.1-0.5). In this way, the obtained positive electrode material has a better performance. In some embodiments, in step S1, the ratio of the molar weight of the Li atom to the total molar weight of the Ni, Co, and Mn atoms is 1.01-1.25, optionally 1.05-1.15. In this way, the obtained positive electrode material has a relatively high specific discharge capacity and a relatively good cycling performance (for example, the material is less prone to undergo irreversible phase transition during cycling).

Herein, for the sake of brevity, Me can be used to denote the total molar weight of Ni, Co, and Mn, then the ratio of the molar weight of the Li atom to the total molar weight of the Ni, Co, and Mn atoms can be denoted as "Li/Me."

The lithium source compound may be any conventional lithium source compound known to those skilled in the art. In some embodiments, the lithium source compound is selected from one or more of $LiOH \cdot H_2O$, $Li_2CO_3$, $Li_2SO_4$, $LiNO_3$, $LiC_2O_4$, $CH_3COOLi$, etc. Using the above lithium source compounds may be beneficial for the positive electrode material to have a stable layered structure and can ensure a relatively high electrochemical performance.

In some embodiments, the grinding and mixing are carried out by means of mechanical milling or ball milling. In some embodiments, the grinding and mixing are carried out in a ball mill, optionally in a heated ball mill. In some embodiments, optionally, the rotational speed of the ball mill is 500-3000 r/min, optionally 1000-2000 r/min. In some embodiments, the grinding and mixing are carried out at a temperature of 30-100°C, optionally 40-60°C. Using the above process conditions can accelerate the W source compound to be uniformly mixed with the precursor material and stably attached thereto, which is beneficial for the element W to be enriched at the grain boundary.

In some embodiments, in step S1, the sintering is carried out at a temperature of 650-950°C. In some embodiments, the sintering is carried out for 10-20 h. In some embodiments, the sintering is carried out in an air or $O_2$ atmosphere. Using the above process conditions can obtain a desired positive electrode material.

In some embodiments, the method of the present application further comprises a step of providing a coating layer on the surface of the substrate particle, including:

- S2: mixing the substrate particle obtained in step S1 with a W-containing compound and/or a Co-containing compound, and then sintering same; and/or
- S3: mixing the substrate particle obtained in step S1 or the sinter obtained in step S2 with an Al-containing compound and/or a B-containing compound, and then sintering same.

The substrate particle is coated by means of the above coating steps, which further improves the performance of the material. In the method of the present application, the coating of different elements is carried out in separate steps, which is not only based on the requirements of sintering temperature for achieving the best coating effect of different elements, but also aims to enable the different elements to be in a position in the coating layer that is more conducive to improving the performance of the material. The coating of W and/or Co is carried out before the coating of Al and/or B, that is, preferably, W and/or Co is(are) directly coated onto the surface of the substrate particle; and in this way, the element W in the coating layer can supplement the insufficient W doping at the grain boundary in step S1, thereby contributing to improving the particle integrity and the cycling performance; and meanwhile, Co can reduce the content of lithium impurities on the surface of the substrate particle, and improve the interface stability and the cycling performance. The coated or uncoated substrate particle is coated with the element Al and/or B, both of which are beneficial for reducing the interfacial side reactions between the material and an electrolyte solution, increasing the capacity, and improving the cycling performance of the material.

In some embodiments, in step S2, the W-containing compound has a conventional particle size, and optionally the W-containing compound has a particle size of 0.01-5 $\mu m$, more optionally 0.05-1 $\mu m$, still more optionally 0.1-1 $\mu m$. Using a W-containing compound material having a particle size in such a range can enable the coating to be more uniform.

In some embodiments, in step S2, the substrate particle obtained in step S1 is at least mixed with the W-containing compound, followed by sintering. In some embodiments, in step S2, the W-containing compound is selected from one or more of $WO_3$, $H_2WO_4$, $Li_2WO_4$, $(NH_4)_2WO_4$, $MgWO_4$ and $Zr(WO_3)_2$. Selecting these W-containing compounds is more conducive to forming a stable coating layer, avoiding a direct contact between an electrolyte solution and the substrate particle, and inhibiting the interfacial side reactions.

In some embodiments, in step S2, the addition amount of the element W is 100-2000 ppm, optionally 100-1000 ppm, based on the total weight of the precursor material. Adding the element W in such a range is more beneficial for improving the cycling performance of the material.

In some embodiments, in step S2, the Co-containing compound is selected from one or more of $Co_3O_4$, $Co(OH)_2$, CoO, CoOOH, $Co(CH_3COO)_2$, $CoC_2O_4$, and $CoCO_3$. The above Co-containing compounds used are more beneficial for reducing the lithium impurities on the surface and improving the cycling performance.

In some embodiments, in step S2, the Co-containing compound has a conventional particle size, and optionally the Co-containing compound is present in the form of particles having a particle size of 0.01-10 $\mu$m, optionally 0.1-1 $\mu$m. The addition of a Co-containing compound having a particle size in such a range has a better coating effect, and is more conducive to reducing the content of lithium impurities and improving the cycling performance of the material.

In some embodiments, in step S2, the amount of the element Co in the coating layer is 100-16000 ppm, preferably 1000-13000 ppm, based on the total weight of the positive electrode material. The coating of Co at an amount above is conducive to reducing the lithium impurities on the surface of the substrate particle and improving the cycling performance of the positive electrode material.

In some embodiments, in step S2, the sintering is carried out at a temperature of 500-800°C, preferably 550-750°C. In some embodiments, the sintering is carried out for 5-15 h, preferably 5-10 h. In some embodiments, the sintering is carried out in an air or $O_2$ atmosphere. The use of the sintering process is conducive to further doping $W^{6+}$ in some W-containing compounds into the grain boundary of the substrate particle of the positive electrode material; and meanwhile, it is also beneficial for the Co-containing compound to be coated on the surface of the substrate particle of the positive electrode material and interact with the lithium impurities, thereby the performance of the material.

In some embodiments, in step S3, the B-containing compound is selected from one or more of $BCl_3$, $B_2(SO_4)_3$, $B(NO_3)_3$, BN, $B_2O_3$, $BF_3$, $BBr_3$, $BI_3$, $H_2BO_5P$, $H_3BO_3$, $C_5H_6B(OH)_2$, $C_3H_9B_3O_6$, $(C_2H_5O)_3B$ and $(C_3H_7O)_3B$. In some embodiments, in step S3, the coating amount of B is 100-2000 ppm, preferably 500-1500 ppm, based on the total weight of the positive electrode material. Coating a B-containing compound can further reduce the content of lithium impurities on the surface of the material and increase the capacity of the material; moreover, the interfacial side reactions of the material can be further improved, and the cycling, storage and safety performance of the material can be improved.

In some embodiments, in step S3, the substrate particle obtained in step S1 or the product obtained in step S2 is at least mixed with the B-containing compound, followed by sintering.

In some embodiments, in step S3, the Al-containing compound is selected from one or more of $Al_2O_3$, $Al(OH)_3$, $Al_2(SO_4)_3$, $AlCl_3$ and $Al(NO_3)_3$. In some embodiments, in step S3, the coating amount of Al is 100-3000 ppm, preferably 500-2000 ppm, based on the total weight of the positive electrode material. Coating a Al-containing compound can further improve the interface stability of the material particles and reduce the interfacial side reactions, which are more conducive to improving the cycling, storage and safety performance of the material.

In some embodiments, in step S3, the sintering is carried out at a temperature of 200-500°C, optionally 200-400°C. In some embodiments, the sintering is carried out for 5-15 h, optionally 5-10 h. In some embodiments, the sintering is carried out in an air or $O_2$ atmosphere. Using the sintering process of the present invention is beneficial for a B compound and/or Al compound to be coated on the surface of the substrate particle of the positive electrode material, thus achieving a good coating effect.

In some embodiments, the precursor material is in the form of particles and has a span of volume particle size distribution of 1.1-1.8, optionally 1.2-1.5. In some embodiments, the precursor material has a $D_v50$ of 5-15 $\mu$m, optionally 5-10 $\mu$m. Using such precursor material particles is beneficial for obtaining a desired positive electrode material having a relatively large compacted density, which is conducive to achieving a relatively high capacity. In some embodiments, the mixing in either step S2 or step S3 can be carried out in a suitable apparatus known to those skilled in the art, for example, a coulter mixer, a high-speed mixer, or an inclined mixer.

In yet another aspect of the present application, provided is a positive electrode material obtained according to the method above.

## Secondary battery and power consuming device

In yet another aspect of the present application, provided is a secondary battery, including the positive electrode material of the present application, the positive electrode material obtained by the method of the present application, or the positive electrode plate of the present application.

The secondary battery comprises a battery cell form, a battery module form, and a battery pack form.

In yet another aspect of the present application, provided is a power consuming device, comprising the secondary battery of the present application.

In addition, the battery cell, battery module, battery pack and power consuming device of the present application are described below with reference to the accompanying drawings as appropriate.

In one embodiment of the present application, a secondary battery is provided.

Typically, a secondary battery comprises a positive electrode plate, a negative electrode plate, an electrolyte and a separator. During the charge/discharge of the battery, active ions are intercalated and de-intercalated back and forth between a positive electrode plate and a negative electrode plate. The electrolyte functions to conduct ions between the positive electrode plate and the negative electrode plate. The separator is provided between the positive electrode plate and the negative electrode plate and mainly functions to prevent the positive and negative electrodes from short-circuiting while enabling ions to pass through.

[Positive electrode plate]

In yet another aspect of the present application, provided is a positive electrode plate, comprising the positive electrode material of the present application or the positive electrode material obtained by the method of the present application.

The positive electrode plate comprises a positive electrode current collector and a positive electrode film layer provided on at least one surface of the positive electrode current collector, wherein the positive electrode film layer comprises the positive electrode material of the present application.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the components mentioned above for preparing the positive electrode plate, such as a positive electrode material, a conductive agent, a binder and any other components, in a solvent (such as N-methylpyrrolidone) to form a positive electrode slurry; and coating the positive electrode current collector with the positive electrode slurry, followed by the procedures such as drying and cold pressing, so as to obtain the positive electrode plate.

[Negative electrode plate]

A negative electrode plate comprises a negative electrode current collector and optionally a negative electrode film layer provided on at least one surface of the negative electrode current collector. The negative electrode film layer comprises a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites, and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or as a combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, ketjen black, carbon dots, carbon nanotubes, graphene, and carbon nanofibers.

In some embodiments, the negative electrode film layer may optionally comprise other auxiliary agents, such as thickener (e.g., sodium carboxymethyl cellulose (CMC-Na)), etc.

In some embodiments, the negative electrode plate can be prepared as follows: dispersing the above-mentioned components for preparing the negative electrode plate, such as a negative electrode active material, a conductive agent, a binder and any other components, in a solvent (e.g., deionized water) to form a negative electrode slurry; and coating a negative electrode current collector with the negative electrode slurry, followed by procedures such as drying and cold pressing, so as to obtain the negative electrode plate.

[Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from lithium hexafluorophosphate, lithium tetrafluoroborate, lithium perchlorate, lithium hexafluoroarsenate, lithium bisfluorosulfonimide, lithium bis(trifluoromethanesulfonimide), lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally include an additive. For example, the additive may include a negative electrode film-forming additive and a positive electrode film-forming additive, and may further include an additive that can improve certain performance of the battery, such as an additive that improves the overcharge performance of the battery, or an additive that improves the high temperature or low-temperature performance of the battery.

[Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly. In some embodiments, the separator may also have one or more coating layers.

In some embodiments, an electrode assembly may be formed by a positive electrode plate, a negative electrode plate and a separator by a winding process or a lamination process.

[Outer package]

In some embodiments, the secondary battery may comprise an outer package for encapsulating the positive electrode plate, the negative electrode plate and the electrolyte. As an example, the positive electrode plate, the negative electrode plate and the separator may be laminated or wound to form a laminated or wrapped-structure cell, which is encapsulated within the outer package; and the electrolyte is the electrolyte solution described in the first aspect of the present application, and the electrolyte solution is infiltrated into the cell. The number of the cells in the secondary battery may be one or more, and can be adjusted according to the requirements.

In one embodiment, the present application provides an electrode assembly. In some embodiments, an electrode assembly may be formed by a positive electrode plate, a negative electrode plate and a separator by a winding process or a lamination process. The outer package may be used to encapsulate the above-mentioned electrode assembly and electrolyte.

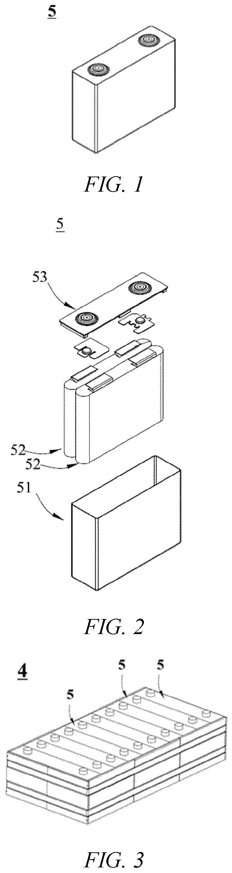

In some embodiments, the outer package of the secondary battery may be a soft bag, such as a pouch-type soft bag. The material of the soft bag may be a plastic and may include, for example, one or more of polypropylene (PP), polybutylene terephthalate (PBT), polybutylene succinate (PBS), etc. In some embodiments, the outer package of the secondary battery can be a hard housing, for example, a hard plastic housing, an aluminum housing, a steel housing, etc. The shape of the secondary battery is not particularly limited in the present application and may be cylindrical, square or of any other shape. For example, Fig. 1 shows a battery cell 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate, and the separator can be manufactured into an electrode assembly 52 by means of a winding process or a lamination process. The electrode assembly 52 is encapsulated in the accommodating cavity. An electrolyte solution is infiltrated into the electrode assembly 52. The number of the electrode assembly 52 contained in the battery cell 5 may be one or more, and can be selected by those skilled in the art according to the actual requirements.

In some embodiments, the battery cell can be assembled into a battery module, and the number of the battery cell contained in the battery module may be one or more, and the specific number can be selected by those skilled in the art according to the application and capacity of the battery module.

Fig. 3 shows a battery module 4 as an example. Referring to Fig. 3, in the battery module 4, a plurality of battery cells 5 may be arranged in sequence in the length direction of the battery module 4. Apparently, the secondary batteries may also be arranged in any other manner. Furthermore, the plurality of battery cells 5 may be fixed by fasteners.

Optionally, the battery module 4 may further comprise a housing having an accommodating space, and the plurality of battery cells 5 are accommodated in the accommodating space.

In some embodiments, the above-mentioned battery module may be further assembled into a battery pack, the number of the battery modules contained in the battery pack may be one or more, and the specific number can be selected by those skilled in the art according to the application and capacity of the battery pack.

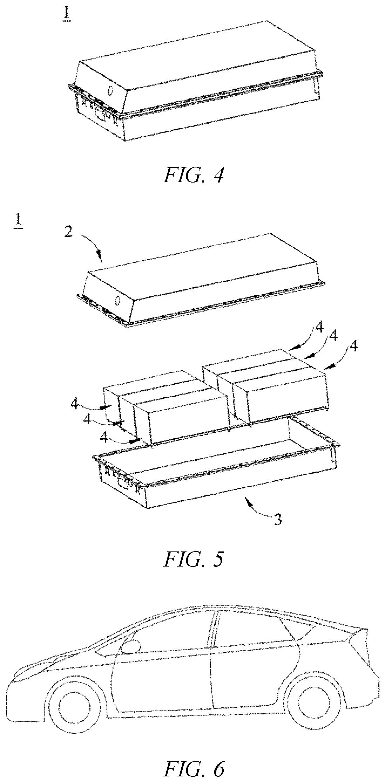

Figs. 4 and 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. A plurality of battery module 4 may be arranged in the battery box in any manner.

In addition, the present application further provides a power consuming device, including the secondary battery provided in the present application. The secondary battery may be used as a power supply of the power consuming device, or an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the battery cell, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

## Examples

Hereinafter, the examples of the present application will be explained. The examples described below are exemplary and are merely for explaining the present application, and should not be construed as limiting the present application. The examples in which the techniques or conditions are not specified are based on the techniques or conditions described in documents in the art or according to the product instructions. The reagents or instruments used therein, for which the manufacturers are not specified, are all conventional products that are commercially available.

## Example 1

1. Preparation of positive electrode material

- S0: A precursor material of $Ni_{0.9}Co_{0.05}Mn_{0.05}(OH)_2$ was provided, with a $D_v50$ being 8.5μm, and $(D_{v90}-D_{v10})/D_{v50}$ being 1.35.
- S1: $WO_3$ (with a particle size of 50 nm) and the precursor material were charged into a heated ball mill for ball milling (at a rotational speed of 2000 r/min, at a temperature of 60°C) to obtain a mixed material, with the addition amount of W being 500 ppm (based on the total weight of the precursor material). $LiOH \cdot H_2O$, $Al_2O_3$, and the mixed material above were mixed, with the molar ratio of Li/Me in the mixture being 1.15, and the addition amount of Al being 500 ppm (based on the total weight of the precursor material). The addition weight of the element M (Al here)/the addition weight of the element W was 1 : 1. The above mixture was then sintered under an $O_2$ atmosphere at 750°C for 20 h, to obtain a substrate particle.

2. Preparation of positive electrode plate

The positive electrode material prepared above, polyvinylidene fluoride (PVDF), and conductive carbon (Super P) were added to methylpyrrolidone (NMP) at a weight ratio of 90 : 5 : 5, and stirred in a drying room to form a positive electrode slurry (with a solid content of 97.44%), and the positive electrode slurry was coated onto an aluminum foil at a loading of 176 mg/cm$^2$, followed by drying and cold pressing to prepare a positive electrode plate.

3. Preparation of negative electrode plate

A negative electrode active material of artificial graphite, hard carbon, a conductive agent of acetylene black, a binder of styrene butadiene rubber (SBR) and a thickening agent of sodium carboxymethyl cellulose (CMC) were added to a solvent system of deionized water at a weight ratio of 90 : 5 : 2 : 2 : 1, and fully stirred and mixed until uniform to obtain a negative electrode slurry with a solid content of 96.5%, and the negative electrode slurry was coated onto a copper foil at a loading of 124 mg/cm$^2$, dried and cold pressed to obtain a negative electrode plate.

4. Separator

A commercially available polyethylene (PE) separator was used.

5. Preparation of electrolyte solution

Lithium hexafluorophosphate ($LiPF_6$) was added to a mixed solvent obtained from dimethyl carbonate (DMC), diethyl carbonate (DEC) and ethylene carbonate (EC) at a volume ratio of 1 : 1 : 1, and fully dissolved to obtain an electrolyte solution (with a lithium salt concentration of 1 mol/L) for use.

6. Preparation of battery (full batter)

The obtained positive electrode plate (20.8 cm$^2$), the separator (22.4 cm$^2$) and the negative electrode plate (22.2 cm$^2$) were stacked in sequence, such that the separator was located between the positive electrode and the negative electrode to provide the function of isolation, and were wound to obtain a bare cell. The bare cell was placed into an outer package, 0.5 g of the electrolyte solution was injected thereto and encapsulated to obtain the full battery.

7. Preparation of button battery:

The positive electrode plate (1.54 cm$^2$) prepared in item 2 above, a lithium plate used as a negative electrode plate, a separator, and the electrolyte solution above were assembled into a button battery in a button battery box.

**II. Performance tests**

1. Characterization of chemical composition of substrate particle:

A certain mass of a powder was digested with HF, and charged into an ICP-OES instrument to detect the contents of elements Li, Ni, Co, Mn, W and M, so as to obtain the specific molar ratio of the element contents, thus obtaining the specific chemical composition (as shown in Table 1).

2. Detection method for the enrichment site of element W in grain boundary:

The substrate particle was cut by means of sputtering by a focused ion beam to obtain the section thereof, then a scanning electron microscope was used in a conventional mode to observe and randomly select a sectional drawing of the particle, then the selected position was fixed, the voltage of the scanning electron microscope was adjusted to 15 kV, and it can be observed that the element W was concentrated at the grain boundary of the substrate particle by means of EDS element plane distribution under the voltage.

The content change of the element W in a single primary particle from the grain boundary to the interior of the particle was measured by means of EDS element line distribution. For the substrate particle of example 1, it could be observed that the content of W had a reduction tendency from the grain boundary to the interior of the primary particle. In the primary particle, the content of W in a range 40 nm away from the grain boundary was 84%, based on the total weight of W in the substrate particle.

3. Verification of uniform doping of element M in material particle:

The substrate particle was cut by means of sputtering by a focused ion beam or metallographic specimen preparation, etc. to obtain the section thereof, and the section morphology inside the particle was observed under a scanning electron microscope using a conventional mode. It could be observed that the element M was uniformly distributed on the section of the substrate particle by means of EDS element plane distribution.

4. Test method for compacted density of material

2 g of the positive electrode material was placed into a cylindrical mold with an inner circle radius of 8 mm, and different pressures were applied to the material in the mold by means of a press until a bimodal particle size distribution occurred under a certain pressure. The compacted density was calculated according to the following formula:

$$\text{Compacted density} = m/(\pi \cdot R^2 \cdot \Delta H)$$

wherein m was the mass of the tested material added to the mold, R was the inner radius of the mold, and $\Delta H$ was the height difference of the material before and after applying a pressure.

5. Test method for initial capacity per gram of button battery:

In a constant-temperature environment at 25°C, a button battery was charged at 0.1 C to 4.3 V, then charged at the constant voltage of 4.3 V until the current was $\leq 0.05$ mA and allowed to stand for 2 min, and the charge capacity at the moment was recorded as C0; then the button battery was discharged at 0.1 C to 2.8 V, and the discharge capacity at this moment was the initial capacity per gram.

6. Test method for initial capacity per gram of full battery:

In a constant-temperature environment at 25°C, a newly prepared full battery was allowed to stand for 5 min, discharged at 1/3 C to 2.8 V, allowed to stand for 5 min, charged at 1/3 C to 4.25 V, then charged at the constant voltage of 4.25 V until the current was $\leq 0.05$ mA, allowed to stand for 5 min, and then discharged at 1/3 C to 2.8 V, and the discharge capacity at this moment was the initial capacity per gram.

7. Test of cycling performance of full battery at 25°C/45°C:

In a constant-temperature environment at 25°C, a full battery was charged at 1 C to 4.25 V, then charged at the constant voltage of 4.25 V until the current was $\leq 0.05$ mA, allowed to stand for 5 min, and then discharged at 1 C to 2.8 V, which was a cycle, and the discharge capacity was measured and recorded as $D_1$; and after 150 cycles, the discharge capacity $D_{150}$ was measured, and the capacity retention rate was calculated according to the following formula:

$$\text{capacity retention rate} = (D_{150}/D_1) \times 100\%,$$

and was recorded in Table 1.

The test was carried out following the steps above in a constant-temperature environment at 45°C and the capacity retention rate was calculated and recorded in Table 1.

8. Test of content of lithium impurities:

The content of lithium impurities of the material was measured by means of acid-base titration. 30 g of a sample was added to 100 ml of pure water, stirred for 30 min and then allowed to stand for 5 min, followed by suction filtration; 10 ml of the supernatant was titrated with 0.05 mol/L of a standard solution of hydrochloric acid; with a pH electrode as an indicator electrode, the end point was determined by means of the jump produced by the change in potential; and the content of the lithium impurities of the positive electrode material was calculated.

9. Test of expansion of full battery:

A full battery cell at the 100% state of charge (SOC) was stored at 70°C for 30 days, and the volumes of the cell before and after the storage were measured by means of the displacement method, respectively. The specific steps were as follows:

A cell to be tested was allowed to stand and cooled to room temperature, the gravity on the cell was measured by means of a balance, with the reading being F1; the cell was then completely immersed in deionized water (the density was known to be 1 g/cm$^3$), the reading of the balance at the moment was F2, then the buoyancy force on the cell was $F_{buoyancy} = F1-F2$; and then according to the Archimedes principle, $F_{buoyancy} = \rho g V_{displaced}$, the $V_{displaced} = (F1-F2)/\rho g$ was calculated, which was the volume of the cell at this moment.

The increase in the volume of the cell after storage relative to the volume of the cell before storage was calculated, which was the gas production amount; and then the ratio of the gas production amount to the capacity of the cell (the designed capacity of the cell was 4 Ah) was the gas production amount per unit capacity (mL/Ah) and was recorded in Table 2 below.

**Example 2**

Example 2 was substantially the same as example 1, except that in step S1, the particle size of the W source compound was 100 nm, and the molar ratio of Li/Me was modified to be 1.1.

**Example 3**

Example 3 was substantially the same as example 1, except that in step S1, the particle size of the W source compound was 56 nm, and the molar ratio of Li/Me was modified to be 1.05.

**Example 4**

Example 4 was substantially the same as example 1, except that in step S1, the particle size of the W source compound was 68 nm, and the molar ratio of Li/Me was modified to be 1.2 : 1.

**Example 5**

Example 5 was substantially the same as example 1, except that the composition of the precursor in step S0 was $Ni_{0.64}Co_{0.35}Mn_{0.01}(OH)_2$, and the particle size of the W source compound in step S1 was 77 nm.

**Example 6**

Example 6 was substantially the same as example 1, except that the composition of the precursor in step S0 was $Ni_{0.64}Co_{0.01}Mn_{0.35}(OH)_2$, and the particle size of the W source compound in step S1 was 105 nm.

**Example 7**

Example 7 was substantially the same as example 1, except that the composition of the precursor in step S0 was $Ni_{0.8}Co_{0.1}Mn_{0.1}(OH)_2$, and the particle size of the W source compound in step S1 was 89 nm.

**Example 8**

Example 8 was substantially the same as example 1, except that the composition of the precursor in step S0 was $Ni_{0.95}Co_{0.025}Mn_{0.025}(OH)_2$, and the particle size of the W source compound in step S1 was 95 nm.

**Example 9**

Example 9 was substantially the same as example 1, except that in step S1, the addition amount of the element Al was 29000 ppm, the addition amount of the element W was 900 ppm, and the particle size of the W source compound was 120 nm.

**Example 10**

Example 10 was substantially the same as example 1, except that in step S1, the addition amount of the element Al was 15000 ppm, the addition amount of the element W was 900 ppm, and the particle size of the W source compound was 85 nm.

**Example 11**

Example 11 was substantially the same as example 1, except that in step S1, the addition amount of the element Al was 5500 ppm, the addition amount of the element W was 19000 ppm, and the particle size of the W source compound was 90 nm.

**Example 12**

Example 12 was substantially the same as example 1, except that in step S1, the addition amount of the element Al was 5500 ppm, the addition amount of the element W was 89000 ppm, and the particle size of the W source compound was 110 nm.

**Example 13**

Example 13 was substantially the same as example 1, except that in step S1, the addition amount of the element Al was 5500 ppm, the addition amount of the element W was 155000 ppm, and the particle size of the W source compound was 90 nm.

**Example 14**

Example 14 was substantially the same as example 1, except that the precursor in step S0 had a Dv50 of 9.5, and a $(D_{v90}-D_{v10})/D_{v50}$ of 1.5; the W source compound in step S1 was replaced with $H_2WO_4$ (with a particle size of 94 nm), and the addition amount of W was 1000 ppm, based on the total weight of the precursor material; and the M source compound was $ZrO_2$, and the ratio of the added weight of M to W was 1 : 0.33.

**Example 15**

Example 15 was substantially the same as example 1, except that the precursor in step S0 had a Dv50 of 9, and a $(D_{v90}-D_{v10})/D_{v50}$ of 1.2; the W source compound in step S1 was replaced with $Li_2WO_4$ (with a particle size of 68 nm), and the addition amount of W was 1500 ppm, based on the total weight of the precursor material; and the M source compound was $TiO_2$, and the ratio of the added weight of M to W was 1 : 0.3.

**Example 16**

Example 16 was substantially the same as example 1, except that the W source compound in step S1 was replaced with $Li_2WO_4$ (with a particle size of 72 nm), and the addition amount of W was 1500 ppm, based on the total weight of the precursor material; and the M source compound was MgO, and the ratio of the added weight of M to W was 1 : 1.

**Example 17**

Example 17 was substantially the same as example 1, except that in step S1, the particle size of the W source compound was 78 nm, the addition amount of Al was 100 ppm, and the addition amount of W was 100 ppm, based on the total weight of the precursor material.

**Example 18**

Example 18 was substantially the same as example 1, except that in step S1, the particle size of the W source compound was 90 nm, the addition amount of Al was 2000 ppm, and the addition amount of W was 2000 ppm, based on the total weight of the precursor material.

**Example 19**

Example 19 was substantially the same as example 1, except that in step S1, the particle size of the W source compound was 60 nm, the addition amount of Al was 1000 ppm, and the addition amount of W was 1000 ppm, based on the total weight of the precursor material.

**Example 20**

Example 20 was substantially the same as example 1, except that in step S1, the particle size of the W source compound was 120 nm, the addition amount of Al was 5000 ppm, and the addition amount of W was 1000 ppm, based on the total weight of the precursor material.

**Example 21**

Example 21 was substantially the same as example 1, except that in step S1, the particle size of the W source compound was 150 nm, the addition amount of Al was 5000 ppm, and the addition amount of W was 500 ppm, based on the total weight of the precursor material.

**Example 22**

Example 22 was substantially the same as example 1, except that in step S1, the particle size of the W source compound was 80 nm, the addition amount of Al was 5000 ppm, and the addition amount of W was 2500 ppm, based on the total weight of the precursor material.

**Comparative example 1**

A positive electrode material having a chemical composition of $LiNi_{0.9}Co_{0.05}Mn_{0.05}O_2$ in the prior art was used in comparative example 1, and the remaining steps were the same as in example 1.

The relevant parameters of the substrate particle prepared in examples 1-12 were shown in Table 1:

Table 1

| Examples | Chemical composition of substrate particle | Content of W at grain boundary* | Particle size of W source compound (nm) | Total weight of W in substrate particle (ppm)** | Ratio of added weight of M to W | b : c | Span of volume particle size distribution |
|---|---|---|---|---|---|---|---|
| Example 1 | $Li_{1.08}[Ni_{0.89818}Co_{0.04988}Mn_{0.04988}Al_{0.00180}W_{0.00026}]O_2$ | 84% | 65 | 485 | 1 : 1 | 6.92 | 1.35 |
| Example 2 | $Li_{1.04}[Ni_{0.89818}Co_{0.04988}Mn_{0.04988}Al_{0.00180}W_{0.00026}]O_2$ | 81% | 100 | 487 | 1 : 1 | 6.92 | 1.42 |
| Example 3 | $Li_{1.03}[Ni_{0.89818}Co_{0.04988}Mn_{0.04988}Al_{0.00180}W_{0.00026}]O_2$ | 86% | 56 | 487 | 1 : 1 | 6.92 | 1.29 |
| Example 4 | $Li_{1.18}[Ni_{0.89818}Co_{0.04988}Mn_{0.04988}Al_{0.00180}W_{0.00026}]O_2$ | 85% | 68 | 482 | 1 : 1 | 6.92 | 1.32 |
| Example 5 | $Li_{1.08}[Ni_{0.63868}Co_{0.34928}Mn_{0.00998}Al_{0.00180}W_{0.00026}]O_2$ | 87% | 77 | 484 | 1 : 1 | 6.92 | 1.35 |
| Example 6 | $Li_{1.08}[Ni_{0.63868}Co_{0.00998}Mn_{0.34928}Al_{0.00180}W_{0.00026}]O_2$ | 88% | 105 | 490 | 1 : 1 | 6.92 | 1.33 |
| Example 7 | $Li_{1.08}[Ni_{0.79838}Co_{0.09978}Mn_{0.09978}Al_{0.00150}W_{0.00026}]O_2$ | 89% | 89 | 486 | 1 : 1 | 6.92 | 1.28 |
| Example 8 | $Li_{1.08}[Ni_{0.94798}Co_{0.02498}Mn_{0.02408}Al_{0.00180}W_{0.00026}]O_2$ | 88% | 95 | 485 | 1 : 1 | 6.92 | 1.34 |
| Example 9 | $Li_{1.04}[Ni_{0.81858}Co_{0.04548}Mn_{0.04548}Al_{0.09}W_{0.00046}]O_2$ | 86% | 120 | 886 | 1 : 0.03 | 195.65 | 1.32 |
| Example 10 | $Li_{1.08}[Ni_{0.85458}Co_{0.04748}Mn_{0.04748}Al_{0.05}W_{0.00046}]O_2$ | 87% | 85 | 872 | 1 : 0.05 | 108.7 | 1.3 |
| Example 11 | $Li_{1.08}[Ni_{0.8748}Co_{0.0486}Mn_{0.0486}Al_{0.0180}W_{0.01}]O_2$ | 85% | 90 | 18531 | 1 : 3.45 | 1.8 | 1.27 |
| Example 12 | $Li_{1.06}[Ni_{0.8388}Co_{0.0466}Mn_{0.0466}Al_{0.0180}W_{0.05}]O_2$ | 89% | 110 | 88327 | 1 : 16.18 | 0.36 | 1.35 |
| Example 13 | $Li_{1.02}[Ni_{0.8028}Co_{0.0446}Mn_{0.0446}Al_{0.0180}W_{0.09}]O_2$ | 89% | 90 | 152090 | 1 : 28.18 | 0.2 | 1.33 |
| Example 14 | $Li_{1.08}[Ni_{0.8967}Co_{0.0498}Mn_{0.0498}Zr_{0.0032}W_{0.0005}]O_2$ | 85% | 94 | 931 | 1 : 0.33 | 6.4 | 1.35 |
| Example 15 | $Li_{1.08}[Ni_{0.8904}Co_{0.0494}Mn_{0.0494}Ti_{0.01}W_{0.0008}]O_2$ | 86% | 68 | 1493 | 1:0.3 | 12.5 | 1.41 |
| Example 16 | $Li_{1.08}[Ni_{0.8940}Co_{0.0496}Mn_{0.0496}Mg_{0.0060}W_{0.0008}]O_2$ | 87% | 72 | 1494 | 1 : 1 | 7.5 | 1.39 |
| Example 17 | $Li_{1.082}[Ni_{0.8996}Co_{0.05}Mn_{0.05}Al_{0.00035}W_{0.00005}]O_2$ | 82% | 78 | 93 | 1 : 1 | 7 | 1.44 |
| Example 18 | $Li_{1.08}[Ni_{0.89255}Co_{0.0496}Mn_{0.0496}Al_{0.0072}W_{0.00105}]O_2$ | 81% | 90 | 1961 | 1 : 1 | 6.86 | 1.33 |
| Example 19 | $Li_{1.08}[Ni_{0.8963}Co_{0.0498}Mn_{0.0498}Al_{0.0036}W_{0.0005}]O_2$ | 86% | 60 | 933 | 1 : 1 | 7.2 | 1.41 |
| Example 20 | $Li_{1.08}[Ni_{0.8836}Co_{0.0491}Mn_{0.0491}Al_{0.0177}W_{0.0005}]O_2$ | 92% | 120 | 938 | 1 : 0.2 | 35.4 | 1.39 |
| Example 21 | $Li_{1.08}[Ni_{0.88384}Co_{0.04910}Mn_{0.04910}Al_{0.01770}W_{0.00026}]O_2$ | 93% | 150 | 488 | 1 : 0.1 | 68.08 | 1.27 |
| Example 22 | $Li_{1.08}[Ni_{0.8828}Co_{0.0491}Mn_{0.0491}Al_{0.0177}W_{0.0013}]O_2$ | 90% | 80 | 2436 | 1 : 0.5 | 13.62 | 1.36 |

EP 4 593 113 A1

| Examples | Chemical composition of substrate particle | Content of W at grain boundary* | Particle size of W source compound (nm) | Total weight of W in substrate particle (ppm)** | Ratio of added weight of M to W | b : c | Span of volume particle size distribution |
|---|---|---|---|---|---|---|---|
| Comparative example 1 | Li[Ni$_{0.9}$Co$_{0.05}$Mn$_{0.05}$]O$_2$ | - | - | - | - | - | 1.38 |

* The weight percentage content (wt.%) of W in the primary particle within a thickness of 40 nm from the grain boundary, based on the total weight of W doped in the substrate particle.
** Based on the total weight of the substrate particle.
*** Span of volume particle size distribution = (D$_v$90-D$_v$10)/D$_v$50.

The performance test results of the positive electrode materials in examples 1-22 were shown in Table 2:

Table 2

| Examples | Compacted density g/cc | Capacity of button battery at 0.1C mAh/g | Capacity of full battery at 1/3C mAh/g | Capacity retention rate at 25°C | Capacity retention rate at 45°C | Content of lithium impurities ppm | Expansion test mL/Ah |
|---|---|---|---|---|---|---|---|
| Example 1 | 3.53 | 222.6 | 217.1 | 89.9% | 87.4% | 3452 | 19.41 |
| Example 2 | 3.56 | 226.3 | 213.5 | 89.7% | 87.8% | 3529 | 21.47 |
| Example 3 | 3.59 | 225.8 | 212.3 | 89.4% | 87.6% | 3286 | 20.84 |
| Example 4 | 3.58 | 227.8 | 215.7 | 89.7% | 87.3% | 3174 | 20.86 |
| Example 5 | 3.59 | 182.5 | 167.2 | 93.1% | 90.3% | 3182 | 22.64 |
| Example 6 | 3.58 | 183.1 | 167.5 | 93.3% | 90.1% | 3137 | 21.78 |
| Example 7 | 3.61 | 201.5 | 186.7 | 91.4% | 89.1% | 3071 | 21.92 |
| Example 8 | 3.6 | 236.1 | 221.4 | 88.5% | 86.4% | 2979 | 20.46 |
| Example 9 | 3.57 | 223.7 | 210.4 | 86.4% | 83.6% | 2914 | 20.17 |
| Example 10 | 3.56 | 223.4 | 210.6 | 86.9% | 82.4% | 2925 | 20.43 |
| Example 11 | 3.58 | 225.8 | 213.2 | 86.5% | 84.1% | 2891 | 19.92 |
| Example 12 | 3.59 | 224.3 | 210.1 | 86.4% | 83.9% | 3013 | 21.79 |
| Example 13 | 3.6 | 222.7 | 207.8 | 86.2% | 83.3% | 2935 | 20.81 |
| Example 14 | 3.57 | 227.4 | 214.7 | 92.6% | 90.9% | 2541 | 23.15 |
| Example 15 | 3.56 | 226.9 | 218.3 | 93.1% | 91.2% | 2369 | 26.52 |
| Example 16 | 3.62 | 225.9 | 216.9 | 89.4% | 86.8% | 2873 | 25.31 |
| Example 17 | 3.57 | 225.6 | 213.5 | 87.3% | 85.4% | 3261 | 41.34 |
| Example 18 | 3.66 | 225.8 | 214.2 | 92.6% | 90.3% | 3103 | 15.42 |
| Example 19 | 3.54 | 226.3 | 214.3 | 91.2% | 89.7% | 3065 | 11.16 |
| Example 20 | 3.62 | 224.9 | 213.8 | 93.7% | 91.5% | 2854 | 9.15 |
| Example 21 | 3.66 | 227.5 | 215.3 | 95.7% | 91.9% | 2645 | 5.46 |
| Example 22 | 3.49 | 226.4 | 214.8 | 92.2% | 90.8% | 2919 | 10.72 |
| Comparative example 1 | 3.46 | 226.5 | 213.9 | 80.3% | 76.4% | 3829 | 58.71 |

From Tables 1-2, it can be seen that when comparing the examples with the comparative example, the positive electrode material of the present invention has a relatively high compacted density, a relatively high capacity, a relatively good cycling performance (having a relatively high capacity retention rate within a wide temperature range), a relatively low content of lithium impurities, less gas production and a better safety.

**Example 23**

Example 23 and example 1 were the same in step S1, and the differences therebetween were that after obtaining the substrate particle in step S1, the following step S2 was carried out:
S2: mixing the substrate particle obtained in step S1 with $H_2WO_4$ (with a particle size of 0.05 nm), with the addition amount of W being 2000 ppm (based on the total weight of the substrate particle); and sintering the mixed material under an $O_2$ atmosphere at 700°C for 15 h, to obtain a positive electrode material having a W-containing coating layer.

**Example 24**

Example 24 and example 1 were the same in step S1, and the differences therebetween were that after obtaining the substrate particle in step S1, the following step S2 was carried out:

S2: mixing the substrate particle obtained in step S1 with CoO (with a particle size of 0.1 $\mu$m), with the addition amount of Co being 16000 ppm (based on the total weight of the substrate particle); and sintering the mixed material under an $O_2$ atmosphere at 700°C for 15 h, to obtain a positive electrode material having a Co-containing coating layer.

**Example 25**

Example 25 and example 1 were the same in step S1, and the differences therebetween were that after obtaining the substrate particle in step S1, the following step S3 was carried out:

S3: mixing the substrate particle obtained in step S1 with $Al_2O_3$, with the addition amount of Al being 3000 ppm (based on the total weight of the substrate particle); and sintering the mixture under an $O_2$ atmosphere at 500°C for 5 h, to obtain a positive electrode material having an Al-containing coating layer.

**Example 26**

Example 26 and example 1 were the same in step S1, and the differences therebetween were that after obtaining the substrate particle in step S1, the following step S3 was carried out:

S3: mixing the substrate particle obtained in step S1 with $B_2O_3$, with the addition amount of B being 2000 ppm (based on the total weight of the substrate particle); and sintering the mixture under an $O_2$ atmosphere at 500°C for 5 h, to obtain a positive electrode material having a B-containing coating layer.

**Example 27**

Example 27 and example 1 were the same in step S1, and the differences therebetween were that after obtaining the substrate particle in step S1, the following steps S2 and S3 were carried out:

S2: mixing the substrate particle obtained in step S1 with $H_2WO_4$, with the addition amount of W being 2000 ppm (based on the total weight of the substrate particle); and sintering the mixed material under an $O_2$ atmosphere at 700°C for 15 h; and

S3: mixing the sinter obtained in step S2 with $B_2O_3$, with the addition amount of B being 2000 ppm; and sintering the mixture under an $O_2$ atmosphere at 500°C for 5 h. Thus, a positive electrode material having a coating layer containing W and B was obtained.

**Example 28**

Example 28 and example 1 were the same in step S1, and the differences therebetween were that after obtaining the substrate particle in step S1, the following steps S2 and S3 were carried out:

S2: mixing the substrate particle obtained in step S1 with CoO, with the addition amount of Co being 16000 ppm (based on the total weight of the substrate particle); and sintering the mixed materials under an $O_2$ atmosphere at 700°C for 15 h.

S3: mixing the sinter obtained in step S2 with $B_2O_3$, with the addition amount of B being 2000 ppm (based on the total weight of the substrate particle); and sintering the mixture under an $O_2$ atmosphere at 500°C for 5 h, to obtain a positive electrode material having a coating layer containing Co and B.

**Example 29**

Example 29 and example 1 were the same in step S1, and the differences therebetween were that after obtaining the substrate particle in step S1, the following steps S2 and S3 were carried out:

S2: mixing the substrate particle obtained in step S1 with CoO and $H_2WO_4$, with the addition amount of Co being 16000 ppm, and the addition amount of W being 2000 ppm, both based on the total weight of the substrate particle; and sintering the mixed materials under an $O_2$ atmosphere at 700°C for 15 h.

S3: mixing the sinter obtained in step S2 with $Al_2O_3$ and $B_2O_3$, with the addition amount of Al being 3000 ppm, the addition amount of B being 2000 ppm, and the coating amount of Al : the coating amount of B being 1.5 : 1; and sintering the mixture under an $O_2$ atmosphere at 500°C for 5 h, to obtain a positive electrode material having a coating layer.

**Examples 30-44**

These examples were different from example 29 in that the contents of the elements in steps S2 and S3 were adjusted respectively. The content details and the performance test data were detailed in Tables 3-4 below.

The presence of the coating layer and the thickness thereof could be observed by means of a scanning electron microscope, and it can be seen in the field of view of the microscope that the coating layer was an independent layer outside the substrate particle. The contents of various elements in the coating layer were quantitatively obtained by means of an EDS element distribution test using a scanning electron microscope.

Table 3

| Examples | Content of each element in coating layer (ppm) | | | | Span of volume particle size distribution |
|---|---|---|---|---|---|
| | W | Co | Al | B | |
| Example 23 | 2000 | - | - | - | 1.34 |
| Example 24 | - | 16000 | - | - | 1.37 |
| Example 25 | - | - | 3000 | - | 1.43 |
| Example 26 | - | - | - | 2000 | 1.41 |
| Example 27 | 2000 | - | - | 2000 | 1.36 |
| Example 28 | - | 16000 | - | 2000 | 1.33 |
| Example 29 | 2000 | 16000 | 3000 | 2000 | 1.32 |
| Example 30 | 100 | 16000 | 3000 | 2000 | 1.36 |
| Example 31 | 500 | 16000 | 3000 | 2000 | 1.38 |
| Example 32 | 1000 | 16000 | 3000 | 2000 | 1.37 |
| Example 33 | 2000 | 100 | 3000 | 2000 | 1.28 |
| Example 34 | 2000 | 1000 | 3000 | 2000 | 1.29 |
| Example 35 | 2000 | 7000 | 3000 | 2000 | 1.32 |
| Example 36 | 2000 | 13000 | 3000 | 2000 | 1.46 |
| Example 37 | 2000 | 16000 | 100 | 2000 | 1.45 |
| Example 38 | 2000 | 16000 | 500 | 2000 | 1.4 |
| Example 39 | 2000 | 16000 | 1000 | 2000 | 1.43 |
| Example 40 | 2000 | 16000 | 2000 | 2000 | 1.38 |
| Example 41 | 2000 | 16000 | 3000 | 100 | 1.4 |
| Example 42 | 2000 | 16000 | 3000 | 500 | 1.44 |
| Example 43 | 2000 | 16000 | 3000 | 1000 | 1.35 |
| Example 44 | 2000 | 16000 | 3000 | 1500 | 1.45 |

Table 4

| Examples | Compacted density g/cc | Capacity of button battery at 0.1C mAh/g | Capacity of full battery at 1/3C mAh/g | Capacity retention rate at 25°C | Capacity retention rate at 45°C | Content of lithium impurities ppm | Expansion test mL/Ah |
|---|---|---|---|---|---|---|---|
| Example 23 | 3.66 | 226.1 | 217.8 | 91.4% | 88.6% | 1736 | 15.61 |
| Example 24 | 3.58 | 225.8 | 217.6 | 91.1% | 88.4% | 1662 | 15.21 |
| Example 25 | 3.56 | 225.5 | 217.1 | 90.2% | 88.1% | 1771 | 16.38 |
| Example 26 | 3.59 | 226.7 | 217.7 | 91.1% | 88.3% | 1758 | 15.45 |
| Example 27 | 3.55 | 226.8 | 217.7 | 92.1% | 89.6% | 1445 | 13.34 |
| Example 28 | 3.57 | 226.2 | 216.9 | 91.8% | 89.2% | 1539 | 13.75 |

(continued)

| Examples | Compacted density g/cc | Capacity of button battery at 0.1C mAh/g | Capacity of full battery at 1/3C mAh/g | Capacity retention rate at 25°C | Capacity retention rate at 45°C | Content of lithium impurities ppm | Expansion test mL/Ah |
|---|---|---|---|---|---|---|---|
| Example 29 | 3.66 | 227.1 | 217.3 | 95.9% | 92.9% | 1345 | 4.46 |
| Example 30 | 3.65 | 226.8 | 217.8 | 92.6% | 91.2% | 1568 | 8.16 |
| Example 31 | 3.53 | 227.1 | 217.7 | 93.9% | 91.7% | 1487 | 7.32 |
| Example 32 | 3.61 | 227.2 | 217.8 | 94.7% | 92.3% | 1453 | 5.54 |
| Example 33 | 3.58 | 226.2 | 217.6 | 94.2% | 91.5% | 1953 | 13.25 |
| Example 34 | 3.61 | 226.1 | 217.4 | 95.1% | 91.9% | 1863 | 11.64 |
| Example 35 | 3.62 | 225.9 | 217.2 | 95.4% | 92.1% | 1742 | 10.57 |
| Example 36 | 3.58 | 226.4 | 217.9 | 95.5% | 92.3% | 1679 | 6.74 |
| Example 37 | 3.59 | 226.1 | 217.3 | 94.4% | 91.5% | 1843 | 14.23 |
| Example 38 | 3.6 | 226.5 | 217.8 | 94.9% | 91.7% | 1645 | 12.74 |
| Example 39 | 3.59 | 226.6 | 217.4 | 95.1% | 92.1% | 1571 | 9.32 |
| Example 40 | 3.62 | 226.2 | 217.4 | 95.4% | 92.3% | 1527 | 6.19 |
| Example 41 | 3.57 | 226.1 | 217.2 | 94.1% | 91.2% | 1942 | 12.67 |
| Example 42 | 3.55 | 226.4 | 217.1 | 94.3% | 91.4% | 1731 | 11.32 |
| Example 43 | 3.57 | 226.1 | 217.5 | 94.7% | 91.9% | 1658 | 8.43 |
| Example 44 | 3.58 | 226.5 | 217.6 | 95.2% | 92.1% | 1478 | 6.18 |

From Tables 3-4, it can be seen that after being coated, the positive electrode material of the present invention shows a further improved capacity and cycling performance, and also a reduced content of lithium impurities on the surface and significantly alleviated expansion, such that the safety performance of the battery is improved.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that may be conceived by those skilled in the art to the embodiments, and other modes constructed by combining some of the constituent elements of the embodiments also fall within the scope of the present application.

**Claims**

1. A positive electrode material comprising a substrate particle having a chemical composition of formula (I):

$$Li_{1+a}[Ni_xCo_yMn_zM_bW_c]O_2 \qquad (I)$$

wherein the M is selected from one or more of Mo, Zr, Al, Ti, Sb, Nb, Te, Mg, Al, Ca, Zn and Sr, $0.6 \leq x < 1, 0 < y < 0.4, 0 < z < 0.4, 0 < a < 0.2, 0 < b < 0.1, 0 < c < 0.1$, and $x + y + z + b + c = 1$; and the W is enriched at the grain boundary of the substrate particle.

2. The positive electrode material according to claim 1, wherein the formula (I) satisfies one or more of the following conditions (1) to (8):

(1) the M is selected from one or more of Zr, Al, Mg and Ti;
(2) $0.8 \leq x < 1$;
(3) $0 < a < 0.08$;

(4) $0 < b < 0.018$;
(5) $0 < c < 0.0013$;
(6) $b : c = 0.076$-$384$, optionally $b : c = 5$-$69$, more optionally $b : c = 13$-$69$;
(7) $(1 + a) : (x + y + z) = 1.01$-$1.25$, optionally $(1 + a) : (x + y + z) = 1.05$-$1.15$; and
(8) the doping weight of the element M is $\geq$ the doping weight of the element W, and optionally the weight ratio of the element M to the element W is $1 : (0.1$-$1)$, more optionally $1 : (0.1$-$0.5)$.

3. The positive electrode material according to claim 1 or 2, wherein in the substrate particle, the content of the W within a thickness of 40 nm from the grain boundary is at least 80 wt%, optionally at least 90 wt%, based on the total weight of the W in the substrate particle.

4. The positive electrode material according to any one of claims 1 to 3, wherein the content of the W in the substrate particle is 100-200000 ppm, optionally 100-3000 ppm, more optionally 500-2500 ppm, based on the total weight of the substrate particle.

5. The positive electrode material according to any one of claims 1 to 4, wherein the positive electrode material has a span of volume particle size distribution, i.e., $(D_v90$-$D_v10)/D_v50$, of 1.1-1.8, optionally 1.2-1.5, more optionally 1.25-1.45.

6. The positive electrode material according to any one of claims 1 to 5, further comprising a coating layer provided on the surface of the substrate particle, wherein the coating layer comprises at least one element from W, Co, Al and B; optionally, the coating layer comprises at least the element W and/or the element B; and more optionally, the coating layer comprises the elements W, Co, Al and B.

7. The positive electrode material according to claim 6, wherein the coating layer satisfies one or more of the following conditions (1) to (5):

(1) the coating layer comprises 100-2000 ppm, optionally 500-1000 ppm, of the element W, based on the total weight of the substrate particle;
(2) the coating layer comprises 100-16000 ppm, optionally 1000-13000 ppm, of the element Co, based on the total weight of the substrate particle;
(3) the coating layer comprises 100-3000 ppm, optionally 500-2000 ppm, of the element Al, based on the total weight of the substrate particle;
(4) the coating layer comprises 100-2000 ppm, optionally 500-1500 ppm, of the element B, based on the total weight of the substrate particle; and
(5) the coating layer comprises the elements W, Co, Al and B, and the total amount of the four elements is 1000-22000 ppm, preferably 1000-15000 ppm, based on the total weight of the substrate particle.

8. A method for preparing a positive electrode material comprising a substrate particle having a chemical composition of formula (I):

$$Li_{1+a}[Ni_xCo_yMn_zM_bW_c]O_2 \qquad (I)$$

wherein the M is selected from one or more of Mo, Zr, Al, Ti, Sb, Nb, Te, Mg, Al, Ca, Zn and Sr, $0.6 \leq x < 1, 0 < y < 0.4, 0 < z < 0.4, 0 < a < 0.2, 0 < b < 0.1, 0 < c < 0.1$, and $x + y + z + b + c = 1$; and the W is enriched at the grain boundary of the substrate particle;
the method comprising the following steps:

- S0: providing a precursor material having a chemical composition of $Ni_xCo_yMn_z(OH)_2$, wherein $0.6 \leq x < 1, 0 < y < 0.4, 0 < z < 0.4$, and $x + y + z = 1$, and
- S1: grinding and mixing the precursor material with a W source compound, then adding an Li source compound and an M source compound thereto and fully mixing same, and sintering the mixture to obtain the substrate particle.

9. The method according to claim 8, wherein the particle of the W source compound has a particle size of 20-500 nm, optionally 50-300 nm; and/or

wherein the W source compound is selected from one or more of $WO_3$, $H_2WO_4$, $Li_2WO_4$, $(NH_4)_2WO_4$, $MgWO_4$

and $Zr(WO_3)_2$; optionally from one or more of $WO_3$, $H_2WO_4$ and $Li_2WO_4$; and/or
wherein the addition amount of the element W is 100-200000 ppm, optionally 100-3000 ppm, optionally 500-2500 ppm, based on the total weight of the precursor material.

10. The method according to claim 8 or 9, wherein the M source compound is selected from sulfates, nitrates, chlorides, carbonates, oxides, hydroxides, oxalates, and acetates that contain the element M, optionally the M source compound is an oxide of the element M;

   optionally, the element M is one or more of Zr, Al, Mg and Ti; and
   optionally, the addition amount of the element M is 100-5000 ppm, optionally 500-3000 ppm, based on the total weight of the precursor material.

11. The method according to any one of claims 8 to 10, wherein step S1 satisfies at least one of the following conditions:

   (1) the ratio of the added weight of the element M to the element W is 1 : (0.1-1), optionally 1 : (0.1-0.5); and
   (2) the ratio of the molar weight of the Li atom to the total molar weight of the Ni, Co, and Mn atoms is 1.01-1.25, optionally 1.05-1.15.

12. The method according to any one of claims 8 to 11, wherein the grinding and mixing are carried out by means of mechanical milling or ball milling; optionally, the grinding and mixing are carried out in a ball mill, optionally a heated ball mill;

   optionally, the grinding is carried out at a rotational speed of 500-3000 r/min, optionally 1000-2000 r/min, or 800-1500 r/min; and
   optionally, the grinding and mixing are carried out at a temperature of 30-100°C, optionally 40-60°C.

13. The method according to any one of claims 8 to 12, further comprising a step of providing a coating layer on the surface of the substrate particle, including:

   - S2: mixing the substrate particle obtained in step S1 with a W-containing compound and/or a Co-containing compound, and then sintering same; and/or
   - S3: mixing the substrate particle obtained in step S1 or the sinter obtained in step S2 with an Al-containing compound and/or a B-containing compound, and then sintering same.

14. The method according to claim 13, wherein step S2 satisfies one or more of the following conditions:

   (1) the W-containing compound is selected from one or more of $WO_3$, $H_2WO_4$, $Li_2WO_4$, $(NH_4)_2WO_4$, $MgWO_4$ and $Zr(WO_3)_2$; and
   (2) the addition amount of the element W is 100-2000 ppm, optionally 500-1000 ppm, based on the total weight of the precursor material.

15. The method according to claim 13 or 14, wherein step S2 satisfies one or more of the following conditions:

   (1) the Co-containing compound is selected from one or more of $Co_3O_4$, $Co(OH)_2$, CoO, CoOOH, $Co(CH_3COO)_2$, $CoC_2O_4$, and $CoCO_3$; and
   (2) the addition amount of Co is 100-16000 ppm, preferably 1000-13000 ppm, based on the total weight of the precursor material.

16. The method according to any one of claims 13 to 15, wherein in step S3, the Al-containing compound is selected from one or more of $Al_2O_3$, $Al(OH)_3$, $Al_2(SO_4)_3$, $AlCl_3$ and $Al(NO_3)_3$; and/or
the addition amount of Al is 100-3000 ppm, preferably 500-2000 ppm, based on the total weight of the precursor material.

17. The method according to any one of claims 13 to 16, wherein in step S3, the B-containing compound is selected from one or more of $BCl_3$, $B_2(SO_4)_3$, $B(NO_3)_3$, BN, $B_2O_3$, $BF_3$, $BBr_3$, $BI_3$, $H_2BO_5P$, $H_3BO_3$, $C_5H_6B(OH)_2$, $C_3H_9B_3O_6$, $(C_2H_5O)_3B$ and $(C_3H_7O)_3B$, and/or
the addition amount of B is 100-2000 ppm, preferably 500-1500 ppm, based on the total weight of the precursor material.

18. The method according to any one of claims 8 to 17, wherein the precursor material has a span of volume particle size distribution of 1.1-1.8, optionally 1.2-1.5; and/or
the precursor material has a $D_v50$ of 5-15 $\mu$m, optionally 5-10 $\mu$m.

19. A secondary battery, comprising a positive electrode material according to any one of claims 1 to 7 or a positive electrode material obtained by a method according to any one of claims 8 to 18.

20. A power consuming device comprising a secondary battery according to claim 19.

**5**

FIG. 1

5

53

52

52

51

FIG. 2

**4**　　5　　5

5

FIG. 3

1

FIG. 4

1

2

4 4

4

4

4

4

3

FIG. 5

FIG. 6

## INTERNATIONAL SEARCH REPORT

| International application No. |
|---|
| **PCT/CN2022/135799** |

| A. | CLASSIFICATION OF SUBJECT MATTER |
|---|---|

H01M 4/505(2010.01)i;  H01M 4/525(2010.01)i

According to International Patent Classification (IPC) or to both national classification and IPC

| B. | FIELDS SEARCHED |
|---|---|

Minimum documentation searched (classification system followed by classification symbols)

IPC：H01M

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 电池, 正极, 材料, W, 钨, 晶界, battery, cell, cathode, positive, material, tungsten, grain, boundary

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 103563139 A (TOYOTA MOTOR CORP.) 05 February 2014 (2014-02-05) description, paragraphs 10-109 | 1-20 |
| X | CN 111094188 A (SUMITOMO METAL MINING CO., LTD.) 01 May 2020 (2020-05-01) description, paragraphs 36-229 | 1-20 |
| X | CN 114436347 A (NINGBO RONBAY NEW ENERGY TECHNOLOGY CO., LTD.) 06 May 2022 (2022-05-06) description, paragraphs 5-73 | 1-20 |
| A | CN 109461926 A (YANTAI ZHUONENG LITHIUM BATTERY CO., LTD.) 12 March 2019 (2019-03-12) entire document | 1-20 |
| A | CN 111422921 A (SVOLT ENERGY TECHNOLOGY CO., LTD.) 17 July 2020 (2020-07-17) entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 August 2023** | **14 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/135799**

| Patent document cited in search report | | | Publication date (day/month/year) | Patent family member(s) | | | Publication date (day/month/year) |
|---|---|---|---|---|---|---|---|
| CN | 103563139 | A | 05 February 2014 | WO | 2012164693 | A1 | 06 December 2012 |
| | | | | US | 2014127582 | A1 | 08 May 2014 |
| | | | | US | 9126845 | B2 | 08 September 2015 |
| | | | | KR | 20140008464 | A | 21 January 2014 |
| | | | | KR | 101584880 | B1 | 13 January 2016 |
| | | | | JPWO | 2012164693 | A1 | 31 July 2014 |
| | | | | JP | 5692617 | B2 | 01 April 2015 |
| | | | | CN | 103563139 | B | 06 July 2016 |
| CN | 111094188 | A | 01 May 2020 | EP | 3653581 | A1 | 20 May 2020 |
| | | | | EP | 3653581 | A4 | 21 April 2021 |
| | | | | JP | 2019019047 | A | 07 February 2019 |
| | | | | JP | 7293576 | B2 | 20 June 2023 |
| | | | | KR | 20200040760 | A | 20 April 2020 |
| | | | | KR | 102532481 | B1 | 16 May 2023 |
| | | | | WO | 2019013053 | A1 | 17 January 2019 |
| | | | | CN | 115385395 | A | 25 November 2022 |
| | | | | US | 2023135908 | A1 | 04 May 2023 |
| CN | 114436347 | A | 06 May 2022 | None | | | |
| CN | 109461926 | A | 12 March 2019 | CN | 109461926 | B | 11 March 2022 |
| CN | 111422921 | A | 17 July 2020 | None | | | |

Form PCT/ISA/210 (patent family annex) (July 2022)